# EUROPEAN PATENT SPECIFICATION

(11) **EP 0 664 379 B1**
(45) Date of publication and mention of the grant of the patent: **02.09.1998**
(21) Application number: 94117113.4
(22) Date of filing: 28.10.1994
(51) Int. Cl.: F01M 13/02, F02M 35/04

(54) **Vent duct for combustible vapours, particularly for lubricating oil, in an internal combustion engine**
Entlüftungsleitung für brennbare Dämpfe, insbesondere für Schmieröl in einer Brennkraftmaschine
Conduit d'évacuation pour des vapeurs combustibles, notamment pour l'huile de graissage dans un moteur à combustion interne

(30) Priority: 20.01.1994 IT TO940009 U
(43) Date of publication of application: 26.07.1995
(73) Proprietor: OFFICINE METALLURGICHE G. CORNAGLIA S.p.A., 10092 Beinasco (IT)
(72) Inventor: Bordignon, Gianfranco, I-10137 Torino (IT); Ramponi, Claudio, I-10094 Giaveno (IT)
(74) Representative: Plebani, Rinaldo

(56) References cited:
- DE-C- 3 625 376
- FR-A- 2 013 859
- FR-A- 2 250 028
- FR-A- 2 625 256
- US-A- 4 995 891
- PATENT ABSTRACTS OF JAPAN vol. 18, no. 338 (M-1628) 27 June 1994 & JP-A-06 081 624 (TOYOTA AUTOM LOOM WORKS) 22 March 1994

## Description

The present invention relates to a vent duct for combustible vapours such as lubricating oil and petrol, which may be given off in parts of an internal combustion engine during normal operation. More particularly, the invention relates to a vent duct which connects the said engine parts to an air filter casing of the engine so as to conduct the vapour from those parts to the air-inlet duct of the engine by making use of the low pressure existing therein. A vent duct of this type, for example is disclosed in FR-A-2 250 028.

It is known that vapours may be given off from petrol or lubricating oil in various parts of an internal combustion engine, for example in the carburetor (or in the throttle valve body of engines with fuel-injection) and in the tappet, or valve, cover (or, in general, in any parts of the engine which become very hot and have substantial lubrication). These vapours, if they are not removed, may condense undesirably when the engine is stopped, and, subsequently, on restarting of the engine, will re-vaporise and cause various operational problems (for example, so-called vapour lock). For this reason, the parts concerned, usually in fact the tappet cover and the throttle valve body (or carburetor), are connected to the air filter body and hence, through this, to the inlet manifold of the engine through a vent duct.

In known embodiments, the vent duct is constituted by various separate parts, in particular: an elbow connector which is fixed in a through-seat in the air filter casing, usually by hot-blade or ultrasonic welding since these components are generally made of synthetic plastics material; a straight sleeve which connects the elbow connector to an attachment tube of the tappet cover; a connector tube inserted in a lateral branch of the elbow connector and which also connects this to the throttle body (or carburetor); and rings or other devices for ensuring the mechanical and fluid-tight connection of the sleeve and connector tube to the various connectors and attachment tubes.

Known vent tubes are thus, on the one hand, constituted by such a number of pieces, of such a type, that it is impossible to mount them automatically on the engine, which problem is very serious in modern, new-generation engines and, on the other hand, does not ensure good sealing, particularly with regard to condensed lubricating oil which, when the engine is stopped, runs down the connector sleeve towards the tappet cover and soils this.

The object of the invention is to provide a connector duct which has a simple structure, which is easy to assemble and, at the same time, ensures good sealing against vapour and condensates.

On the basis of the invention as set out in claim 1.

More particularly, the duct further includes a small supplementary connector tube for connection to a second part of the engine containing vapour to be withdrawn, the supplementary connector tube being formed integrally with, and projecting laterally from, a main body of the connector tube and including a right-angled bend.

Thus all the connector sleeves used in conventional ducts are encapsulated in a single, unitary element which can be made easily by moulding; moreover it is easy to assemble, even automatically, since the opposite end attachments couple sealingly with their respective tubes without the need for rings or other fixing devices.

According to another aspect of the invention, a second of the attachment elements of the connector tube is constituted by a larger-diameter, cup-shaped end portion of a second, longer arm of the main body of the connector tube; this has, nearer to its inlet opening, a plurality of internal annular teeth, of V-shape in radial section, disposed side by side in a multi-ribbed formation and, at its opposite end, an annular seat shaped so as to be able to house an end portion of the second attachment tube in abutment with a respective axial shoulder of the seat; an annular rib projecting inwardly of the seat from the shoulder and being shaped so that it can be fitted into the second attachment tube and, for this purpose, tapering towards the inlet opening; the teeth having an internal diameter slightly less than the outer diameter of the second attachment tube so as to couple therewith with interference.

Thus, any oil which condenses and runs along the connector tube towards the first engine part, particularly the tappet cover is guided within the second tube, without however reaching the sealing zone and, hence, without any risk of loss or soiling.

Further characteristics and advantages of the invention will become clearer from the description which follows of one non-limitative embodiment, given with reference to the appended drawings, in which:
- Figure 1 is an elevational view of several members of an internal combustion engine (not illustrated) connected by a vent duct according to the invention:
- Figure 2 is an orthogonal view of the duct Figure 1 rotated through 90°C; and
- Figure 3 is a sectional view of a detail of a connector tube of the duct of the invention on an enlarged scale.

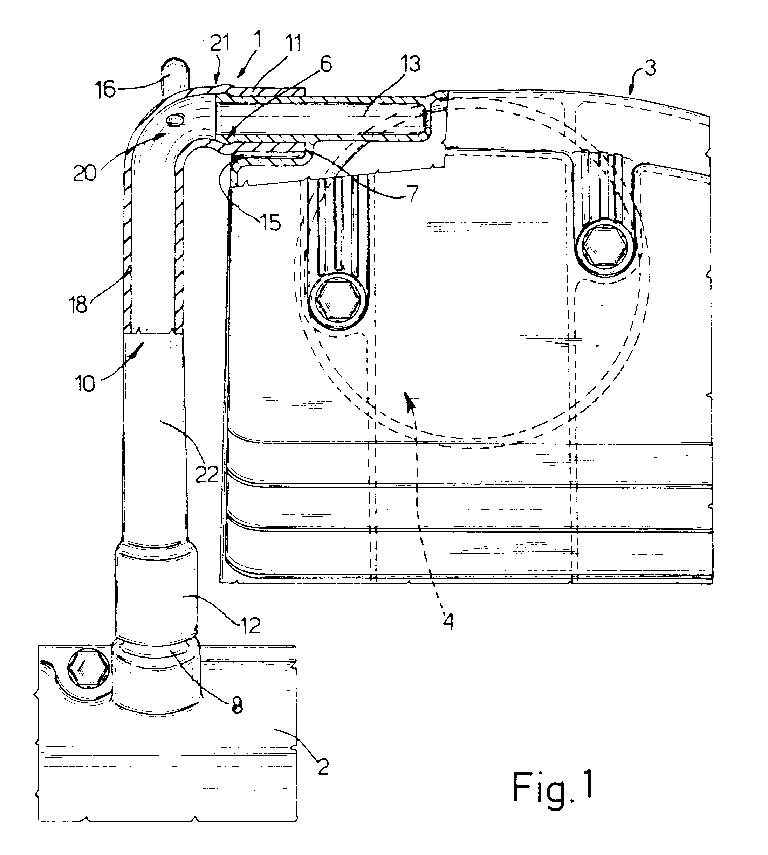

With reference to Figures 1 to 3, a vent duct is generally indicated 1 for connecting at least one engine part 2, in this particular case a tappet cover, of an internal combustion engine (known and not illustrated for simplicity) containing vapour to be removed (in this case of lubricating oil), with an air filter casing 3 of the engine. The oil vapour may in fact be evacuated into an air-inlet manifold 4 of the engine, through the duct 1 and the filter casing 3, as a result of the suction due to the low pressure existing in the manifold 4 when the engine is running.

The duct 1 includes a first attachment tube 6 formed integrally with an element 7 of the air filter casing 3, a second attachment tube 8, in itself known, projecting from the cover 2, and a unitary connector tube 10, of resiliently deformable material, including two opposite end attachments 11 and 12 adapted for connection to the tubes 6 and 8, with fluid-tight sealing, by simple coaxial fitting onto them.

According to the invention, the tube 6 projects from the element 7 of the air filter casing 3 and does not include a bend; in particular the tube 6 is constituted by a straight element 13 formed integrally, in a single piece, with the element 7 of the filter body 3, for example by moulding since one is preferably concerned with elements made from synthetic plastics material, the element 13 entering the element 7 tangentially of the air-inlet manifold 4 and projecting out of the air filter casing 3 at least partly within an external lateral recess 15 in the element 7; this recess 15 has dimensions such that it can house the upper attachment element 11 of the tube 10 when this is connected to the tube 6.

The vent duct 1 further includes a supplementary connector tube 16 for connecting the filter casing 3 to a second engine part containing vapour to be withdrawn, in this particular case the throttle valve body or carburetor (known and not illustrated for simplicity) containing fuel vapour.

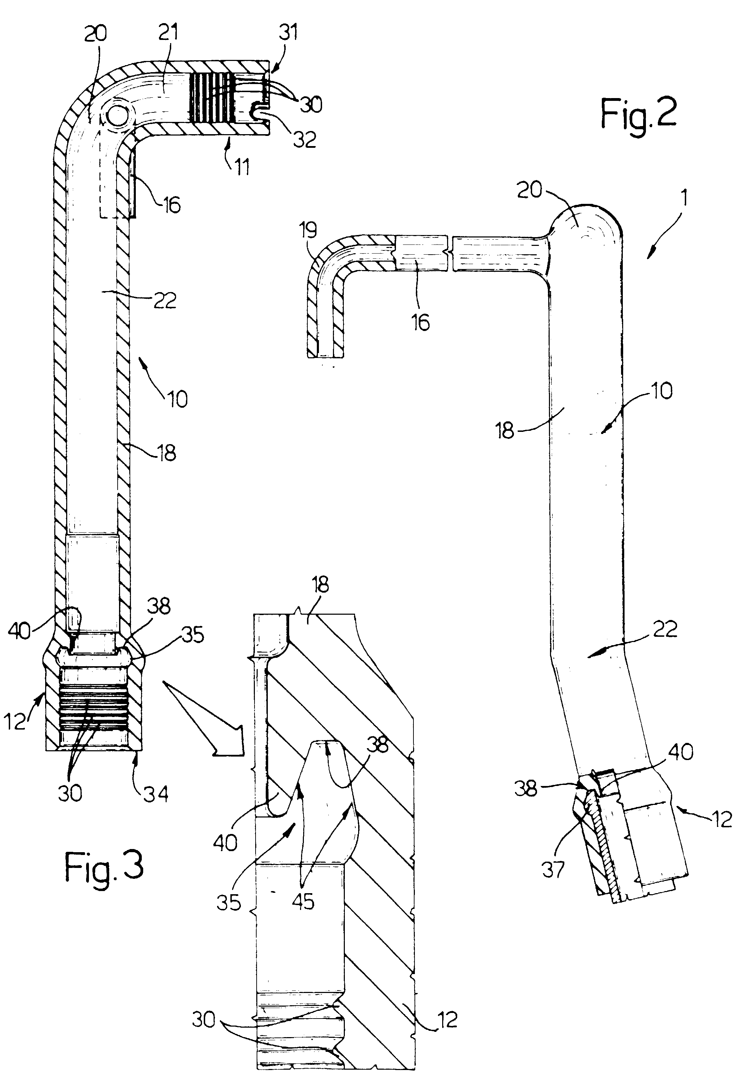

According to the invention, the tube 16 projects laterally from, and is formed integrally with, the main body 18 of the connector tube 10 and includes a right-angled bend 19 (Figure 2). The main body 18 is in turn defined by a tubular cylindrical element connecting together the two opposite end attachments 11 and 12 and includes an elbow 20, in this particular, non-limitative embodiment, illustrated, this elbow being right-angled, and two substantially straight arms 21 and 22 arranged such that the axes of the attachments of 11 and 12 intersect each other; this, together with the conformations of the recess 15 and of the tube 6, enables the tubes 6 and 8 to be made non-coaxial with each other and greatly reduces the lateral bulk of the vent duct 1 compared with known such vent ducts, in that the bulk of the attachment 11 and of the respective arm 21 are absorbed within the depth of the recess 15.

Still according to the invention, the supplementary connector tube 16 is formed integrally with and projects at a right angle from the main body 18, specifically from the elbow 20 and in a direction perpendicular to both of the arms 21 and 22. Thus the tube 16, which must extend as far as the throttle valve body, can be bent during assembly even over a very substantial curvature, reducing bulk. To enable this bending and easy insertion, this tube, the main body 18 and the attachments 11, 12 are moulded integrally as a unitary body from the same elastomeric material which is resistant to oil and fuel vapours.

With particular reference to Figure 3, the first attachment element 11 is constituted by an end portion of the shorter arm 21 of the main body 18; this end portion has a plurality of internal annular teeth 30 of V-shape in radial section, arranged side-by-side in multi-ribbed formation and has an internal diameter slightly less than the outer diameter of the attachment tube 6 so that it couples therewith with interference; an inlet end 31 of the attachment 11 also has a centring notch 32, of known type for facilitating the automatic fitting on the tube 6 in the correct angular position so that the arm 22 is directed properly towards the tube 8.

The attachment element 12, however, is constituted by a larger-diameter, cup-shaped end portion of the longer arm 22 of the main body 18; nearer its inlet end 34, the element 12 has a plurality of annular teeth 30 identical to those of the attachment 11, of V-shape in radial section, arranged side by side in multi-ribbed formation and has an internal diameter slightly less than the outer diameter of the second attachment tube 8 so that it couples therewith with interference.

At its opposite end from the end 34, the attachment 12 has an internal annular seat 35, illustrated on an enlarged scale in the detail of Figure 3, shaped so as to be able to house an end portion 37 (Figure 2) of the attachment tube 8 which abuts a respective axial shoulder 38 of the seat 35; an annular rib 40 projects axially inwardly of the seat 35 from the shoulder 38 towards the end 34 and is shaped so that it can be fitted in use, (Figure 2) into the tube 8 and, for this purpose, is tapered towards the inlet end 34.

As illustrated in Figure 3, the annular teeth 30 have sections in the form of an equilateral triangle with that vertex defining the radially-innermost edge being slightly rounded, and the seat 35 is defined by opposing conical walls 45 which converge towards the shoulder 38 so as to form a lead-in for the insertion of the end portion 37 over the projection 40.

In use, the oil and petrol vapours are drawn into the manifold 4 by the low pressure therein, being sucked through the tube 10, in particular through its main body 18 and the supplementary tube 16. When the engine is stopped, any oil vapour condensed in the tube 10 flows towards the cover 2 along the arm 22 but, because of the projection 40 which extends right into the tube 8, are conducted into the latter without even reaching the sealing zone defined by the teeth 30 and, hence, avoiding any leakage of oil and soiling of the cover 2. Finally it should be noted that, as a result of the teeth 30, the attachments 11 and 12 are able to provide a fluid-tight seal without the use of rings. The strong interference coupling (with elastic deformation of the portion 11) with the tube 6, together with the particular shape of the tube 10, also ensures good mechanical fixing of the tube 10 without the use of rings.

## Claims

1. A vent duct (1) connecting at least one part of an internal combustion engine containing lubricating oil or fuel vapour to an air filter casing (3) of the engine to enable their evacuation to the air-inlet manifold (4) of the engine, the duct comprising a first attachment tube (6) formed integrally with an element (7) of the air filter casing (3) and projecting therefrom without any bends, a second attachment tube (8) projecting from the part of the engine containing the vapour to be withdrawn, and a unitary and resilientlty deformable connector tube (10) made of an elastomeric material and including two opposite end attachments (11,12) adapted for connection to the attachment tubes (6,8) by simple fitting onto them; **characterized in that**
(i)- said end attachments (11,12) consist of end portions of respective arms (21,22) of the main body of the connector tube (10) having the inner diameter of slightly less than the outer diameter of the corresponding attachment tube (6,8) and a plurality of internal annular teeth (30) of V-shape in radial section, arranged side by side in a multi-ribbed formation, so as that said end attachments (11,12) couple with the attachment tubes (6,8) in a fluid tight manner by simple fitting onto them;
(ii)- the end portion constituting said end attachment (12) of the connector tube (10) connected to said second attachment tube (8) having a diameter larger than that of the rest of the connector tube (10), being cup-shaped and comprising an annular seat (35) opposite to said respective teeth (30) in said multi-ribbed formation and shaped to house and end portion (37) of the second attachment tube (8) in abutment with a resepective axial shoulder (38) of the seat; an annular rib (40) projecting into the seat (35) from the shoulder (38) and being shaped so as it fits inside the second attachement tube (8), for this purpose said annular ribs (40) being tapered towards the inlet end (34).

2. A vent duct (1) according to Claim 1, characterised in that the duct further includes a supplementary connector tube (16) for connection to a second part of the engine containing vapour to be withdrawn, the supplementary connector tube (16) being formed integrally with, and projecting laterally from, a main body (18) of the connector tube (10) and including a right-angled bend (19) .

3. A vent duct (1) according to Claim 2, characterised in that the main body (18) of the connector tube (10) is defined by a tubular cylindrical element connecting together the two opposite end attachments (11, 12) and including an elbow (20) and two substantially straight arms (21; 22), arranged such that the axes of the attachments (11, 12) intersect each other; the supplementary connector tube (16) being integral with and extending orthogonally from the main body (18) of the connector tube (10) in correspondence with the elbow (20) and in a direction perpendicular to both of the said arms (21, 22).

4. A vent duct (1) according to Claim 2 or 3, characterised in that the main body (18) of the connector tube (10), the supplementary connector tube (16) and the said opposite attachments (11, 12) of the connector tube (10) are formed by moulding integrally in a single piece from the same elastomeric material which is resistant to oil and fuel vapours.

5. A vent duct (1) according to any one of the preceding Claims, characterised in that the first attachment tube (6) is constituted by a straight element (13) formed integrally, in a single piece, with an element (7) of the air filter casing (3), and entering it tangentially of the air-inlet manifold (4) and projecting externally at least partly within an external lateral recess (15) in the element (7) of the air filter casing (3) adapted to house a first said attachment element (11) of the connector tube (10) so as to reduce the lateral bulk of the vent duct (1).

6. A vent duct (1) according to Claims 4 and 5, characterised in that the first attachment element (11) of the connector tube (10) is constituted by an end portion of a first, shorter arm (21) of the main body of the connector tube (10).

7. A vent duct (1) according to Claim 1, characterised in that the annular teeth (30) have the shape of an equilateral triangle in section with the vertex slightly rounded.

## Patentansprüche

1. Entlüftungsleitung (1) zur Verbindung von mindestens einem Schmieröl- oder Brennstoffdampf enthaltenden Teil eines Verbrennungsmotors mit einem Luftfiltergehäuse (3) des Motors um das Evakuieren zu der Lufteinlaßsammelleitung (4) des Motors zu ermöglichen, wobei die Leitung folgendes aufweist:
ein erstes Integral mit einem Element (7) des Luftfiltergehäuses (3) ausgebildetes und von dort ohne jedwede Biegungen wegragendes Anbringungsrohr (6),
ein zweites von dem Teil des Motors der den abzuziehenden Dampf enthält wegragendes zweites Anbringungsrohr (8) und ein einheitliches und elastisch deformierbares Verbindungsrohr (10) aus Elastomermaterial mit zwei entgegengesetzt liegenden Endanbringungen (11, 12) geeignet zur Verbindung mit den Anbringungsrohren (6, 8) durch einfache Passung darauf; dadurch gekennzeichnet, daß
(i) die Endanbringung (11, 12) aus Endteilen entsprechender Arme (21, 22) des Hauptkörpers des Verbindungsrohrs (10) bestehen und zwar mit einem Innendurchmesser etwas kleiner als der Außendurchmesser des entsprechenden Anbringungsrohrs (6, 8) und eine Vielzahl von innenliegenden ringförmigen Zähnen (30) von im Radialschnitt V-förmiger Gestalt und zwar angeordnet Seite an Seite in einer mehrfach gerippten Ausbildung, so daß die erwähnten Endanbringungen (11, 12) eine Kupplung in einer strömungsmitteldichten Art und Weise mit den Anbringungsrohren (6, 8) vorsehen und zwar durch einfache Passung darauf;
(ii) der Endteil der die Endanbringung (12) des Verbindungsrohrs (10) bildet und mit dem erwähnten zweiten Anbringungsrohr (8) verbunden ist, einen Durchmesser aufweist, der größer ist als der Rest des Verbindungsrohrs (10), und wobei der Endteil ferner napfförmig ist und entgegengesetzt zu den entsprechenden Zähnen (30) in der mehrfach gerippten Ausbildung einen Ringsitz (35) aufweist und geformt ist, um einen Endteil (37) des zweiten Anbringungsrohrs (8) in Anschlag mit einer entsprechenden Axialschulter (38) des Sitzes aufzunehmen; und das ferner eine ringförmige Rippe (40) von der Schulter (38) in den Sitz (35) ragt und derart geformt ist, daß sie in die Innenseite des zweiten Anbringungsrohrs (8) paßt, wobei zu diesem Zweck die ringförmigen Rippen (40) zu dem Einlaßende (34) hin verjüngt sind.

2. Entlüftungsleitung (1) nach Anspruch 1, dadurch gekennzeichnet, daß die Leitung ferner ein Zusatzverbindungsrohr (16) aufweist, zur Verbindung mit einem abzuziehenden dampfenthaltenden zweiten Teil des Motors, wobei das Zusatzverbindungsrohr (16) integral mit einem Hauptkörper (18) des Verbindungsrohrs (10) ausgebildet ist und seitlich davon wegragt und eine rechtwinklige Biegung (19) aufweist.

3. Entlüftungsleitung (1) nach Anspruch 2, dadurch gekennzeichnet, daß der Hauptkörper (18) des Verbindungsrohrs (10) durch ein rohrförmiges zylindrisches Element definiert ist, welches die zwei entgegengesetzt liegenden Endanbringungen (11, 12) verbindet und ein Ellbogenstück (20) umfaßt und zwar im wesentlichen geradlinige Arme (21, 22) derart angeordnet, daß die Achsen der Anbringungen (11, 12) einander schneiden; wobei ferner das Zusatzverbindungsrohr (16) integral mit und sich orthogonal gegenüber dem Hauptkörper (18) des Verbindungsrohrs erstreckend ausgebildet ist und zwar entsprechend dem Ellbogenstück (20) und in einer Richtung senkrecht zu den beiden der erwähnten Arme (21, 22).

4. Entlüftungsleitung (1) nach Anspruch 2 oder 3, dadurch gekennzeichnet, daß der Hauptkörper (18) des Verbindungsrohrs (10), das Zusatzverbindungsrohr (16) und die entgegengesetzt liegenden Anbringungen (11, 12) des Verbindungsrohrs (10) dadurch geformt werden, daß sie integral als ein Stück aus dem Gleichen gegenüber Öl und Brennstoffdämpfen resistenten Elastomermaterial geformt bzw. gespritzt sind.

5. Entlüftungsleitung (1) nach einem der vorhergehenden Ansprüche, dadurch gekennzeichnet, daß das erste Anbringungsrohr (6) durch ein integral geformtes gerades Element (13) in einem einzigen Stück mit einem Element (7) des Luftfiltergehäuses (3) geformt ist und in dieses tangential zur Lufteinlaßsammelleitunq (4) eintritt und nach außen mindestens teilweise innerhalb einer externen seitlichen Ausnehmung (15) im Element (7) des Luftfiltergehäuses (3) ragt und zwar geeignet zur Unterbringung eines ersten, erwähnten Anbringungselements (11) des Verbindungsrohrs (10), um so die seitliche Masse der Entlüftungsleitung (1) zu reduzieren.

6. Entlüftungsleitung (1) nach den Ansprüchen 4 und 5, dadurch gekennzeichnet, daß das erste Anbringungselement (11) des Verbindungsrohrs (10) durch einen Endteil eines ersten kürzeren Arms (21) des Hauptkörpers des Verbindungsrohrs (10) gebildet ist.

7. Entlüftungsleitung (1) nach Anspruch 1, dadurch gekennzeichnet, daß die ringförmigen Zähne (30) die Form eines gleichseitigen Dreiecks im Schnitt besitzen, wobei der Scheitel etwas abgerundet ist.

## Revendications

1. Conduit d'évent (1) reliant au moins une partie d'un moteur à combustion interne, qui contient de l'huile lubrifiante ou des vapeurs de combustible, à un boîtier de filtre à air (3) du moteur afin de permettre leur évacuation vers le collecteur d'entrée d'air (4) du moteur, le conduit comprenant une première tubulure de raccordement (6) formée solidairement avec un élément (7) du boîtier de filtre à air (3) et en saillie par rapport à ce dernier sans aucun coude, une deuxième tubulure de raccordement (8) on saillie par rapport à la partie du moteur contenant les vapeurs à extraire, et un tube de liaison unitaire et élastiquement déformable (10) fabriqué en une matière élastomère et comportant deux raccords d'extrémité opposés (11,12) prévus pour connexion aux tubulures de raccordement (6,8) par simple emmanchement sur ces dernières, caractérisé en ce que :
(i) lesdits raccords d'extrémité (11,12) sont constitués par des parties d'extrémité de branches respectives (21,22) du corps principal du tube de liaison (10) dont le diamètre intérieur est légèrement plus petit que le diamétre extérieur de la tubulure de raccordement correspondante (6,8), et par une pluralité de dents annulaires intérieures (30) à section radiale en forme de V disposées côte à côte en une configuration de nervures multiples, de sorte que lesdits raccords d'extrémité (11,12) s'accouplent aux tubulures de raccordement (6,8) d'une manière étanche aux fluides par simple emmanchement sur ces dernières ;
(ii) la partie d'extrémité qui constitue le dit raccord d'extrémité (12) du tube de liaison (10) connecté à ladite tubulure de raccordement (8) a un diamètre plus grand que celui du reste du tube de liaison (10), elle est en forme de tasse et comporte un siège annulaire (35) à l'opposé desdites dents respectives (30) dans ladite configuration de nervures multiples et profilé de manière à recevoir une partie d'extrémité (37) de la deuxième tubulure de raccordement (8) en butée avec un épaulement axial respectif (38) du siège, une nervure annulaire (40) faisant saillie dans le siège (35) à partir de l'épaulement (38) et étant formée de manière à s'ajuster à l'intérieur de la deuxième tubulure de raccordement (8), lesdites nervures annulaires (40) étant dans ce but évasées vers l'extrémité d'entrée (34)

2. Conduit d'évent (1) selon la revendication 1, caractérisé en ce que le conduit comprend en outre un tube de liaison supplémentaire (16) pour connexion à une deuxième partie du moteur contenant des vapeurs à extraire, le tube de liaison supplémentaire (16) étant formé solidairement d'un corps principal (18) du tube de liaison (10), s'étendant latéralement à partir dudit corps et incluant un coude à angle droit (19).

3. Conduit d'évent (1) selon la revendication 2, caractérisé en ce que le corps principal (18) du tube de liaison (10) est défini par un élément cylindrique tubulaire reliant ensemble les deux raccords d'extrémité opposés (11,12) et incluant un coude (20) et deux branches sensiblement rectilignes (21,22), agencées de sorte que les axes des raccords (11,12) se coupent mutuellement ; le tube de liaison supplémentaire (16) étant solidaire du corps principal (18) du tube de liaison (10) et s'étendant perpendiculairement audit corps en correspondance du coude (20) et dans une direction perpendiculaire aux deux dites branches (21,22).

4. Conduit d'évent (1) selon la revendication 2 ou 3, caractérisé en ce que le corps principal (18) du tube de liaison (10), le tube de liaison supplémentaire (16) et lesdits raccords opposés (11,12) du tube de liaison (10) sont formés par moulage solidairement en une seule pièce de la même matière élastomère qui résiste à l'huile et aux vapeurs de combustible.

5. Conduit d'évent (1) selon une quelconque des revendications précédentes , caractérisé en ce que la première tubulure de raccordement (6) est constituée par un élément rectiligne (13) formé solidairement, en une seule pièce, avec un élément (7) du boîtier de filtre à air (3), entrant dans celui-ci tangentiellement au collecteur d'entrée d'air (4) et faisant saillie extérieurement au moins en partie dans un évidement latéral extérieur (15) de l'élément (7) du boîtier de filtre à air (3) prévu pour recevoir un premier dit élément de raccord (11) du tube de liaison (10) de façon à réduire l'encombrement latéral du conduit d'évent (1).

6. Conduit d'évent (1) selon les revendications 4 et 5, caractérisé en ce que le premier élément de raccord (11) du tube de liaison (10) est constitué par une partie d'extrémité d'une première branche plus courte (21) du corps principal du tube de liaison (10).

7. Conduit d'évent (1) selon la revendication 1, caractérisé en ce que les dents annulaires (30) ont la forme d'un triangle équilatéral dont le sommet est légèrement arrondi, en coupe.
